(19)

Europäisches Patentamt
European Patent Office
Office européen des brevets

(11) **EP 3 226 408 A1**

(12) **EUROPEAN PATENT APPLICATION**
published in accordance with Art. 153(4) EPC

(43) Date of publication:
**04.10.2017 Bulletin 2017/40**

(51) Int Cl.:
**H02P 27/06** (2006.01)

(21) Application number: **14906701.9**

(22) Date of filing: **26.11.2014**

(86) International application number:
**PCT/JP2014/081266**

(87) International publication number:
**WO 2016/084170 (02.06.2016 Gazette 2016/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **NISSAN MOTOR CO., LTD.
Yokohama-shi, Kanagawa 221-0023 (JP)**

(72) Inventors:
- **MORI, Tomoaki
  Atsugi-shi
  Kanagawa 243-0123 (JP)**
- **SHOUJI, Mitsuhiro
  Atsugi-shi
  Kanagawa 243-0123 (JP)**

(74) Representative: **Hoefer & Partner Patentanwälte
mbB
Pilgersheimer Straße 20
81543 München (DE)**

(54) **ELECTRIC MOTOR CONTROL DEVICE AND METHOD**

(57)　A control device of an electric motor, including an electric motor, a drive portion that supplies power to the electric motor, a voltage commanding portion that controls the drive portion on the basis of a torque command, and control a drive torque of the electric motor, a current limiting portion that outputs a limiting signal for limiting power outputted by the drive portion in a case in which a current value between the drive portion and the electric motor exceeds a predetermined value, and a limiting permission determining portion that determines whether the current limiting portion permits or prohibits an output of the limiting signal to the drive portion, when the drive torque of the electric motor cannot satisfy the torque command in a case in which the current limiting portion outputs the limiting signal, the limiting permission determining portion prohibits the current limiting portion from outputting the limiting signal to the drive portion.

Fig.1

EP 3 226 408 A1

**Description**

TECHNICAL FIELD

The present invention relates to a control device and a control method of an electric motor.

BACKGROUND ART

In controlling a motor (electric motor), a mechanism is required for circuit protection in a case in which an overcurrent or an abnormality in current indication occurs.
JP08-107602A discloses a motor control circuit that resumes electrification upon pausing the electrification at a time an abnormality occurs for less than a certain time, and stops the electrification when the abnormality occurs for more than the certain amount of time.

SUMMARY OF INVENTION

A control device of an electric motor controls values such as a current value, a phase of a current, and a phase of a voltage, on the basis of a torque command. At this time, while the electric motor is controlled with a certain torque command, when a current is limited, the phase of the voltage deviates from the phase of the current; this causes a drive torque of the electric motor to be unable to satisfy the torque command, and may cause the drive torque of the electric motor to transiently decrease.
The present invention is accomplished in view of such problems, and an object thereof is to provide a control device of an electric motor that controls so that the torque command does not deviate from an actual torque, even in the case of limiting any overcurrent.
According to one aspect of this invention, a control device of an electric motor, including an electric motor, a drive portion that supplies power to the electric motor, a voltage commanding portion that controls the drive portion on the basis of a torque command, and control a drive torque of the electric motor, a current limiting portion that outputs a limiting signal for limiting power outputted by the drive portion in a case in which a current value between the drive portion and the electric motor exceeds a predetermined value, and a limiting permission determining portion that determines whether the current limiting portion permits or prohibits an output of the limiting signal to the drive portion, when the drive torque of the electric motor cannot satisfy the torque command in a case in which the current limiting portion outputs the limiting signal, the limiting permission determining portion prohibits the current limiting portion from outputting the limiting signal to the drive portion.

BRIEF DESCRIPTION OF DRAWINGS

Fig. 1 is a functional block diagram showing a function of a control device of an electric motor of an embodiment of the present invention.
Fig. 2 is an explanatory diagram showing a configuration of a control device of an electric motor of an embodiment of the present invention.
Fig. 3 is an explanatory diagram showing changes in phases of the current and voltage when an inverter of an embodiment of the present invention performs current limiting.
Fig. 4 is an explanatory diagram of one example of a limiting permission map of a limiting permission determining portion of an embodiment of the present invention.
Fig. 5A shows a time change of a torque command in a PWM signal generating portion and a drive torque of a motor, and a time change of a current value and a voltage value of a motor in vector control, of an embodiment of the present invention.
Fig. 5B shows a time change of current values of each of a three-phase voltage of a motor and a time change of a voltage phase and a current phase, of an embodiment of the present invention.

DESCRIPTION OF EMBODIMENTS

Embodiments of the present invention will be described with reference to the attached drawings.

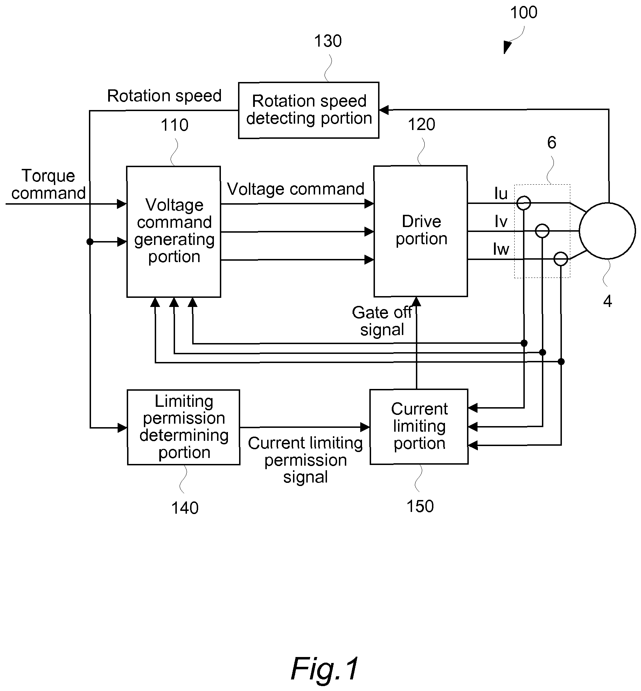

Fig. 1 is a block diagram showing a function of a control device 100 of an electric motor of an embodiment of the present invention.
Fig. 1 is a block diagram showing a function accomplished by the control device 100 of an electric motor of the present embodiment, and is a view showing a subordinate concept of an embodiment of the present invention.

A three-phase alternating current motor (hereinafter referred to as "motor") 4 drives upon receiving a three-phase alternating current supplied from a drive portion 120.

The motor 4 is configured of, for example, a permanent magnet synchronous motor; a magnetic flux generates to a coil by a three-phase alternating current supplied from an inverter 3, and rotates and generates a drive torque due to an effect with the permanent magnet.

The drive portion 120 generates the three-phase alternating current from a power source such as a battery on the basis of a voltage command generated by a voltage command generating portion 110, and supplies this to the motor 4. The voltage command generating portion 110, upon receiving a torque command from a driver, generates a voltage command while performing feedback control of a movement of the motor 4 with a rotation speed detecting portion 130 detecting a rotation speed of the motor 4 and an output value of a current sensor 6 detecting currents of each of the phases of the three-phase alternating current supplied to the motor 4.

The current limiting portion 150 detects an overcurrent on the basis of a detected value of the current sensor 6. The current limiting portion 150 limits the supply of power to the motor 4 by outputting a gate off signal to the drive portion 120, when an overcurrent is detected.

A limiting permission determining portion 140 outputs a circuit operation permission signal that indicates whether or not to permit the current limiting portion 150 to output the gate off signal, on the basis of the torque command by the driver and the output value of the rotation speed detecting portion 130.

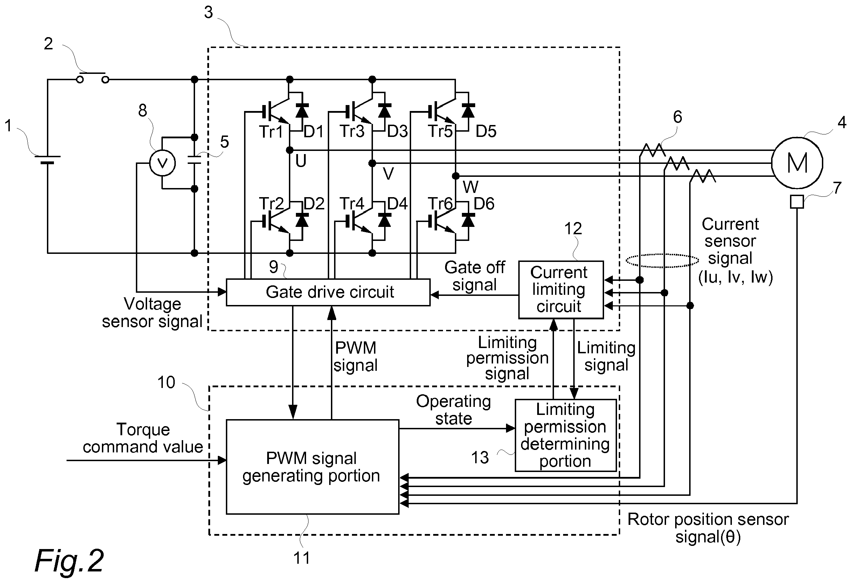

Fig. 2 is an explanatory drawing showing a configuration of the control device 100 of the electric motor of an embodiment of the present invention.

The control device 100 of the electric motor is installed in for example an electric vehicle, and functions as a driving power source of the electric vehicle.

The motor 4 operates by being supplied with a three-phase alternating current from the inverter 3. Direct current power from a battery 1 is supplied to the inverter 3 via a main relay 2. The main relay 2 opens and closes a circuit between the battery 1 and the inverter 3 to pass through or block the power. A capacitor 5 is disposed in parallel between the battery 1 and the inverter 3, to smoothen the direct current power.

The inverter 3 includes a plurality of switching elements Tr (Tr1 to Tr6), and rectifying elements (diodes) D (D1 to D6) connected in parallel to the switching elements Tr and which inhibit reverse current to the switching elements Tr.

The inverter 3 converts direct current power of the battery 1 to an alternating current power by operations of the switching elements Tr, and supplies this to the motor 4. In the present embodiment, three pairs of circuits, which each pair includes a pair of switching elements Tr connected in series, are connected in parallel to the battery 1, and an output between the pair of switching elements Tr serves as one phase of the three-phase electric power inputted into the motor 4.

Each of the three-phase power supplied from the inverter 3 to the motor 4 is provided with a current sensor 6 that detects respective current values Iu, Iv, and Iw of the phases. The current sensor 6 outputs the detected current values Iu, Iv, and Iw to the controller 10.

The motor 4 is provided with a rotor position sensor 7 configured of, for example, a resolver or an encoder. The rotor position sensor 7 outputs a position sensor signal that indicates a rotor position θ of the motor 4, to the controller 10.

A voltage sensor 8 is disposed between both terminals of the capacitor 5, to detect a voltage between both terminals of the capacitor 5. The voltage sensor 8 outputs a detected voltage signal between both terminals of the capacitor 5, to the controller 10.

In the inverter 3, the switching elements Tr1 and T2, the switching elements Tr3 and Tr4, and the switching elements Tr5 and Tr6 are connected serially to each other. U-phase of the motor 4 connects between the switching elements Tr1 and Tr2, V-phase of the motor 4 connects between the switching elements Tr3 and Tr4, and W-phase of the motor 4 connects between the switching elements Tr5 and Tr6.

The inverter 3 includes a gate drive circuit 9 and a current limiting circuit 12. The gate drive circuit 9 outputs an ON/OFF signal of the gates of the switching elements Tr according to an instruction from the controller 10. The current limiting circuit 12 monitors the current values of each of the phases of the three-phase electric power supplied to the motor 4, determines any occurrence of an overcurrent when the current value exceeds a current limiting threshold, and outputs a gate off signal to the gate drive circuit 9. When a gate off signal is outputted, each of the switching elements Tr of the inverter 3 is controlled to be OFF, and the power outputted by the inverter 3 is limited.

The controller 10 includes a PWM signal generating portion 11 that controls the operation of the inverter 3.

The PWM signal generating portion 11 generates a pulse width modulation (PWM) signal on the basis of a torque command value from the driver, and outputs the generated signal to the gate drive circuit 9. The gate drive circuit 9 controls the ON/OFF of the switching elements Tr of the inverter 3 at a predetermined timing, on the basis of the PWM signal from the PWM signal generating portion 11.

The PWM signal generating portion 11 obtains a position sensor signal outputted from the rotor position sensor 7, which signal indicates the rotor position θ of the motor 4. Moreover, the PWM signal generating portion 11 obtains the current values Iu, Iv, and Iw outputted from the current sensor 6 of the phases of the three-phase power supplied from the inverter 3 to the motor 4, and obtains a voltage signal between both terminals of the capacitor 5 via the gate drive circuit 9, which voltage signal is outputted from the voltage sensor 8. The PWM signal generating portion 11 generates a PWM signal to be outputted to the gate drive circuit 9, on the basis of these obtained signals and the torque command value.

The controller 10 includes a limiting permission determining portion 13. The limiting permission determining portion 13, as described later, generates a limiting permission signal that determines whether or not to permit output of the gate off signal to the gate drive circuit 9, when the current limiting circuit 12 of the inverter 3 detects an overcurrent.

The current limiting circuit 12 obtains the current values Iu, Iv, and Iw of the respective three-phase power outputted from the current sensors 6, and determines whether or not an overcurrent is occurring. The current limiting circuit 12, when determining that an overcurrent has occurred, outputs a gate off signal to the gate drive circuit 9 just when the limiting permission signal is inputted. When the gate off signal is inputted into the gate drive circuit 9, each of the switching elements Tr of the inverter 3 is turned off, and the output of the inverter 3 is limited.

Next describes operations of the limiting permission determining portion 13 of an embodiment of the present invention.

In the control device 100 of an electric motor configured as in Fig. 2, the current limiting circuit 12 determines an occurrence of an overcurrent when the current value detected by the current sensor 6 exceeds the current limiting threshold, outputs the gate off signal, and controls the switching elements Tr of the inverter 3 to be OFF.

In such a control of the current limiting circuit 12, when the inverter 3 operates the motor 4 on the basis of a torque request, switching elements Tr controlled to be ON is controlled to be OFF in accordance with the gate off signal. At this time, a counter electromotive force generates in the motor 4, and a voltage in a reverse direction is applied to the switching elements Tr. Due to this voltage in the reverse direction, the phase of the voltage outputted by the inverter 3 changes. On the other hand, the current outputted by the inverter 3 is limited by the gate off signal; thus, the phase of the current outputted by the inverter 3 also changes.

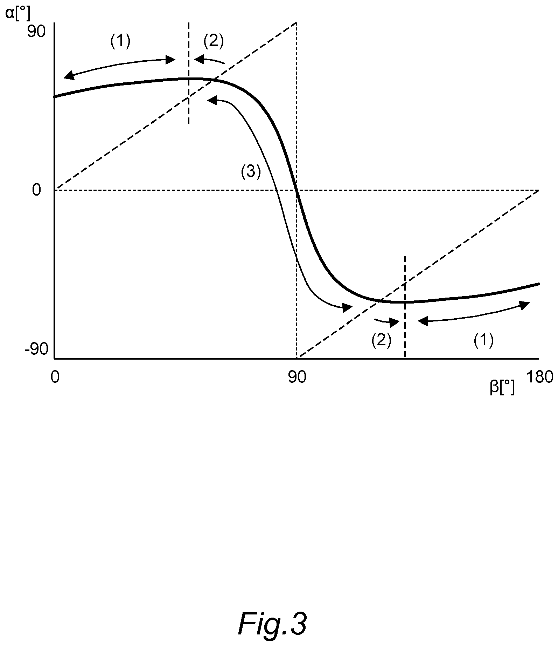

Fig. 3 is an explanatory drawing showing a change in the phase of the current and voltage in a case in which the inverter 3 of an embodiment of the present invention performs current limiting.

The view shown in Fig. 3 shows a state in which each of a current phase α and a voltage phase β changes, while the motor 4 is operating at a certain drive torque.

In a region in which a changed amount of the current phase α is greater than a changed amount of the voltage phase β (regions (1) and (2) in Fig. 3), the gate off signal is outputted by the current limiting circuit 12, and the current phase α first increases when the output of the inverter 3 is limited. Furthermore, accompanying this, the voltage phase β also changes in an increasing direction. As a result, the current phase α and the voltage phase β change in an increasing direction, and thus these will not deviate from each other.

On the other hand, in a region in which the changed amount of the current phase α is smaller than a changed amount of the voltage phase β ((3) in Fig. 3), a cycle of the current phase increasing and the voltage phase decreasing is repeated due to the current limiting; hence, as shown by the arrow, it transitions from the original operation point to a deviated state.

As such, the phases of the voltage and the current in the inverter 3 changes due to the gate off signal. Particularly, while the motor 4 is driven on the basis of an indication torque, when the gate off signal is outputted by the current limiting circuit 12, the phase of the voltage may deviate from that of the current, and the drive torque of the motor 4 may decrease. A state in which the phase of the voltage deviates from that of the current and the drive torque of the motor 4 decreases is called a "deviation mode".

By transitioning into the deviation mode, the drive torque of the motor 4 transiently decreases. Accordingly, in the embodiment of the present invention, transition to the deviation mode is prevented by controlling as described below.

The limiting permission determining portion 13 obtains an operating state of the motor 4 on the basis of various signals outputted from the PWM signal generating portion 11, and determines whether or not to output the limiting permission signal on the basis of the operating state of the motor 4.

As one example of the operating state of the motor 4 used in the determination by the limiting permission determining portion 13, it is possible to determine whether or not the limiting permission signal is outputted on the basis of a relationship between the indication torque and the rotation speed of the motor 4.

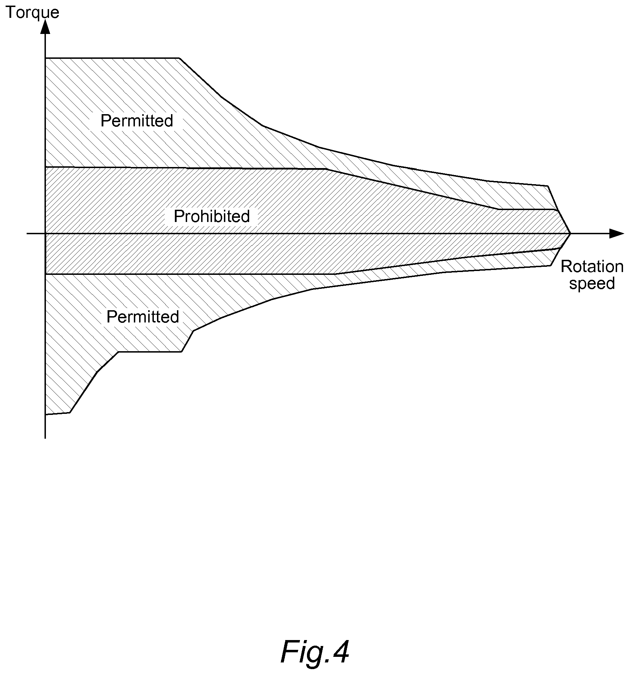

Fig. 4 is an explanatory drawing of one example of a limiting permission map of the limiting permission determining portion 13 of an embodiment of the present invention.

The limiting permission determining portion 13 obtains, from the PWM signal generating portion 11, an indication torque of the motor 4 and an actual rotation speed of the motor 4. The limiting permission determining portion 13 matches the obtained indication torque and the actual rotation speed with the map shown in Fig. 4, and determines whether to output a permission signal or to output the limiting permission signal.

In the limiting permission determination map shown in Fig. 4, a region with a relatively low torque is set as a limiting prohibited region. In a region with a low torque of the motor 4, the current value supplied to the motor 4 also becomes low. In such a driving state, the current value applied to the motor 4 is low, and thus usually no current that exceeds the current limiting threshold and determined as an overcurrent flows.

Meanwhile, when the value of the detected current value is of an abnormal value due to breakages such as breakages within the control device or of the current sensor 6, it is possible to prevent the output of the inverter 3 from being limited.

Next describes another example of an operation of the limiting permission determining portion 13.

The limiting permission determining portion 13 outputs a limiting permission signal to the current limiting circuit 12 when a magnitude relationship of the voltage phase $\alpha$ and current phase $\beta$ of the power supplied from the inverter 3 to the motor 4 satisfies the following mathematical formula 1:

[Math.1]

$$\alpha > \beta$$

As aforementioned in Fig. 3, when the current phase $\alpha$ is greater than the current phase $\beta$ (regions (1) and (2) in Fig. 3), no transition is made to the deviation mode even when the current limiting circuit 12 outputs a gate off signal and an output current of the inverter 3 is limited. That is, even when the output power of the inverter is limited and the voltage phase $\alpha$ changes, the change is in a direction that reduces the change in the voltage phase $\alpha$ by the current phase $\beta$; hence, the voltage phase $\alpha$ does not deviate from the current phase $\beta$.

On the other hand, when the voltage phase $\alpha$ is smaller than the current phase $\beta$ (region (3) in Fig. 3), when the output electric power of the inverter is limited and the voltage phase $\alpha$ changes, the change of the voltage phase $\alpha$ increases due to the current phase $\beta$, and the voltage phase $\alpha$ deviates from the current phase $\beta$. In this case, no limiting permission signal is outputted by the limiting permission determining portion 13, and the limiting by the current limiting circuit 12 is prohibited.

Next describes yet another example of an operation of the limiting permission determining portion 13.

The limiting permission determining portion 13 outputs a limiting permission signal to the current limiting circuit 12, when the following mathematical formula 2 is satisfied in the power supplied from the inverter 3 to the motor 4:

[Math. 2]

$$\phi_a - L_d I_a < 0$$

wherein, $\varphi a$ is a magnetic flux, Ld is a d-axis inductance, and Ia is a value calculated from a d-axis current Id and a q-axis current Iq converted using the following mathematical formula 3 on the basis of a rotor position sensor signal $\theta$ and the current values Iu, Iv and Iw of the phases.

[Math. 3]

$$\begin{bmatrix} I_d \\ I_q \end{bmatrix} = \begin{bmatrix} \cos\theta & \sin\theta \\ -\sin\theta & \cos\theta \end{bmatrix} \sqrt{\frac{2}{3}} \begin{bmatrix} 1 & -\frac{1}{2} & -\frac{1}{2} \\ 0 & \frac{\sqrt{3}}{2} & -\frac{\sqrt{3}}{2} \end{bmatrix} \begin{bmatrix} I_u \\ I_v \\ I_w \end{bmatrix}$$

$$I_a = \sqrt{I_d^2 + I_q^2}$$

As to mathematical formula 2, when a magnetic flux density LdIa generated on a coil side due to the three-phase current applied on the motor 4 is strong enough to cancel out the magnetic flux density φa on a permanent magnet side of the motor 4, the reduced amount of the drive torque is small even when the output power of the inverter 3 is limited by a turn off signal, and does not transit to the deviation mode.

Meanwhile, when the magnetic flux density Ldla on the coil side is smaller than the magnetic flux density φa on the permanent magnet side, transition to the deviation mode may occur when the output power of the inverter 3 is limited. Accordingly, when the mathematical formula 3 described above is satisfied, the limiting permission determining portion 13 outputs no limiting permission signal, and prohibits the limiting by the current limiting circuit 12.

Next describes an example of another control at the time of overcurrent occurrence.

As described above, the limiting permission determining portion 13 determines the prohibition of limiting by the current limiting circuit 12 on the basis of the control of the motor 4 by the inverter 3.

In contrary, when the current value detected by the current sensor 6 exceeds the current limiting threshold and the current limiting circuit 12 determines occurrence of an overcurrent, the limiting permission determining portion 13 constantly issues permission and permits the output of the gate off signal. Thereafter, the controller 10 outputs, to the PWM signal generating portion 11 until a designated time elapses, a torque reduction command to reduce the torque from the torque command inputted into the controller 10.

Even by controlling as such, it is possible to prevent the transition into the deviation mode.

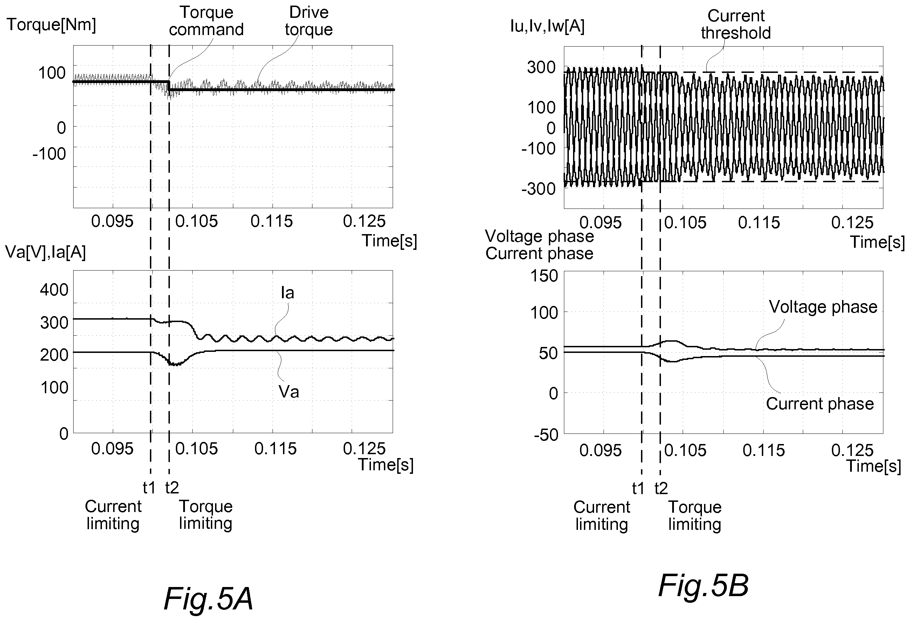

Fig. 5A and Fig. 5B are explanatory diagrams of one example of a control of the current limiting operation, by the limiting permission determining portion 13 of an embodiment of the present invention.

Fig. 5A shows a time change in the torque command in the PWM signal generating portion 11 and the drive torque of the motor 4, and a time change in the current value Ia and the voltage value Va of the motor 4 in the vector control. Fig. 5B shows a time change in the current values of the current values Iu, Iv, and Iw of the three-phase voltage of the motor 4, and a time change of the voltage phase α and the current phase β in the motor 4.

When the current limiting circuit 12 detects an overcurrent, the current limiting circuit 12 outputs a gate off signal to the inverter 3. This limits the output current of the inverter 3 (timing t1).

At this time, the current limiting circuit 12 also notifies to the PWM signal generating portion 11, of the detection of the overcurrent. The PWM signal generating portion 11, upon receiving a notification that an overcurrent is detected, performs a torque down control of the drive torque of the motor 4 driven by the inverter 3, in response to the overcurrent (timing t2).

By controlling as such, the current outputted by the inverter 3 decreases by reducing the torque command; thus, the current value becomes not more than the current limiting threshold and the output of the gate off signal by the current limiting circuit 12 stops, which hence releases the limiting of the inverter 3. That is to say, even if the output of the inverter 3 is limited by the gate off signal, by reducing the torque by the torque reduction command to reduce the drive torque of the motor 4, it is possible to prevent the transition into the deviation mode as described above.

As described above, a control device 100 of an electric motor of an embodiment of the present invention is applicable to a control device 100 of an electric motor including: a motor 4 (electric motor); a drive portion that supplies power to the motor 4; a voltage command generating portion 110 that controls a drive portion 120 on the basis of a torque command and controls a drive torque of the motor 4; a current limiting portion 150 that outputs a limiting signal for limiting power outputted by the drive portion 120 in a case in which a current value between the drive portion 120 and the motor 4 exceeds a predetermined value; and a limiting permission determining portion 140 that determines whether the current limiting portion 150 permits or prohibits an output of a gate off signal (limiting signal) to the drive portion 120.

The limiting permission determining portion 140 is characterized in that the current limiting portion 150 prohibits the output of the limiting signal to the drive portion when the drive torque of the motor 4 cannot satisfy the torque command in a case in which the current limiting portion 150 outputs the limiting signal.

Such a configuration allows for minimizing the current value of the drive portion 120 in a case in which the current value of the motor 4 exceeds a predetermined value, and prevents any breakage of the motor 4 and the drive portion 120 or demagnetization of the permanent magnet of the motor 4. Furthermore, no current limiting is performed when the drive torque of the motor 4 cannot satisfy the torque command in the case in which the limiting signal is outputted, and thus it is possible to avoid becoming in a state in which the drive torque of the motor 4 cannot satisfy the torque command.

In the embodiment of the present invention described above, although an example is described of an electric vehicle driven by the motor 4, it is not limited to this. For example, it is similarly applicable to a hybrid vehicle that installs an engine and runs by the motor 4 and the engine.

Embodiments of the present invention were described above, the above embodiments are merely examples of applications of this invention, and the technical scope of this invention is not limited to the specific constitutions of the above embodiments.

**Claims**

1. A control device of an electric motor, comprising:

   an electric motor;
   a drive portion adapted to supply power to the electric motor;
   a voltage commanding portion adapted to be controlled by the drive portion on the basis of a torque command, and control a drive torque of the electric motor;
   a current limiting portion adapted to output a limiting signal for limiting power outputted by the drive portion in a case in which a current value between the drive portion and the electric motor exceeds a predetermined value; and
   a limiting permission determining portion adapted to determine whether the current limiting portion permits or prohibits an output of the limiting signal to the drive portion,
   when the drive torque of the electric motor cannot satisfy the torque command in a case in which the current limiting portion outputs the limiting signal, the limiting permission determining portion prohibits the current limiting portion from outputting the limiting signal to the drive portion.

2. The control device of an electric motor according to claim 1, wherein
   the limiting permission determining portion prohibits the current limiting portion from outputting the limiting signal to the drive portion, on the basis of the drive torque of the electric motor and a rotation speed.

3. The control device of an electric motor according to claim 1, wherein
   the limiting permission determining portion prohibits the current limiting portion from outputting the limiting signal to the drive portion, on the basis of a voltage phase of power supplied to the electric motor and after the current.

4. The control device of an electric motor according to claim 1, wherein
   the limiting permission determining portion permits the current limiting portion to output the limiting signal to the drive portion, when a magnetic flux density generated on a coil of the electric motor by controlling power supplied by the drive portion is greater than a magnetic flux density generated on a permanent magnet of the electric motor.

5. The control device of an electric motor according to claim 1, wherein the limiting permission determining portion permits an output of the limiting signal for a designated time in a case in which the current limiting portion permits an output of the limiting signal to the drive portion, and the voltage commanding portion reduces a drive torque of the electric motor during the designated time.

6. A control method in a control device of an electric motor, the control device comprising: an electric motor; a drive portion adapted to supply power to the electric motor; and a voltage commanding portion adapted to control a drive torque of the electric motor by controlling power supplied by the drive portion, the control method comprising:

   outputting a limiting signal for limiting power outputted by the drive portion in a case in which a current value between the drive portion and the electric motor exceeds a predetermined amount; and
   prohibiting an output of the limiting signal when the drive torque of the electric motor cannot satisfy the torque command in a case in which the limiting signal is outputted.

100

130

Rotation speed | Rotation speed detecting portion

110

120

6

Torque command → | Voltage command generating portion |

Voltage command → | Drive portion | Iu Iv Iw → 4

Gate off signal

Limiting permission determining portion | Current limiting permission signal → | Current limiting portion

140

150

*Fig.1*

Fig.2

Fig.3

Torque

Permitted

Prohibited

Permitted

Rotation
speed

*Fig.4*

*Fig.5B*

*Fig.5A*

<table>
<tr><td colspan="2" align="center">**INTERNATIONAL SEARCH REPORT**</td><td>International application No.<br>PCT/JP2014/081266</td></tr>
</table>

| A. CLASSIFICATION OF SUBJECT MATTER |
|---|
| *H02P27/06*(2006.01)i |

According to International Patent Classification (IPC) or to both national classification and IPC

| B. FIELDS SEARCHED |
|---|

Minimum documentation searched (classification system followed by classification symbols)
H02P27/06

Documentation searched other than minimum documentation to the extent that such documents are included in the fields searched
Jitsuyo Shinan Koho       1922-1996   Jitsuyo Shinan Toroku Koho   1996-2015
Kokai Jitsuyo Shinan Koho   1971-2015   Toroku Jitsuyo Shinan Koho   1994-2015

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| A | JP 4-372599 A  (Fuji Electric Co., Ltd.),<br>25 December 1992 (25.12.1992),<br>paragraphs [0005] to [0006]<br>(Family: none) | 1-6 |
| A | JP 2014-147188 A  (Hitachi Automotive Systems, Ltd.),<br>14 August 2014 (14.08.2014),<br>claims 1 to 3<br>(Family: none) | 1-6 |
| A | JP 2013-132135 A  (Aisin AW Co., Ltd.),<br>04 July 2013 (04.07.2013),<br>paragraphs [0015] to [0043]; fig. 1 to 3<br>(Family: none) | 1-6 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>06 February 2015 (06.02.15) | Date of mailing of the international search report<br>24 February 2015 (24.02.15) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (July 2009)

**INTERNATIONAL SEARCH REPORT**

International application No.

PCT/JP2014/081266

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2011-97826 A  (Nissan Motor Co., Ltd.),<br>12 May 2011 (12.05.2011),<br>claim 1<br>(Family: none) | 1-6 |
| A | JP 8-322281 A  (Matsushita Electric Industrial Co., Ltd.),<br>03 December 1996 (03.12.1996),<br>paragraph [0008]<br>(Family: none) | 1-6 |
| A | JP 2012-50259 A  (Toyota Motor Corp.),<br>08 March 2012 (08.03.2012),<br>paragraphs [0084] to [0086]; fig. 9<br>(Family: none) | 1-2,6 |
| A | JP 2000-209888 A  (Fujitsu General Ltd.),<br>28 July 2000 (28.07.2000),<br>paragraph [0030]; fig. 3<br>(Family: none) | 1,3,6 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 8107602 A